# EUROPÄISCHE PATENTSCHRIFT

(11) **EP 2 762 522 B1**
(45) Veröffentlichungstag und Bekanntmachung des Hinweises auf die Patenterteilung: **23.01.2019**
(21) Anmeldenummer: 13153901.7
(22) Anmeldetag: 04.02.2013
(51) Int. Cl.: C08J 9/36, C04B 28/26, C04B 28/14, C04B 28/02, C04B 28/10, C04B 28/24, E04B 1/76

(54) **DÄMMELEMENT, DÄMMSYSTEM SOWIE VERFAHREN ZUR SCHALL- UND/ODER WÄRMEDÄMMUNG EINER GEBÄUDEWAND ODER -DECKE**
INSULATING ELEMENT, INSULATING SYSTEM AND METHOD FOR THE ACOUSTIC AND/OR THERMAL INSULATION OF A BUILDING WALL OR CEILING
ÉLÉMENT D'ISOLATION, SYSTÈME D'ISOLATION ET PROCÉDÉ D'ISOLATION THERMIQUE ET/OU ACOUSTIQUE D'UNE PAROI OU D'UN PLAFOND DE BÂTIMENT

(43) Veröffentlichungstag der Anmeldung: 06.08.2014
(73) Patentinhaber: STO SE & Co. KGaA, 79780 Stühlingen (DE)
(72) Erfinder: Burgeth, Gerald, 79787 Lauchringen (DE); Hitzler, Martin, 78244 Gottmadingen (DE); Weier, Andreas, 78647 Trossingen (DE)
(74) Vertreter: Gottschalk, Matthias

(56) Entgegenhaltungen:
- EP-A1- 0 011 211
- EP-A1- 0 529 872
- EP-A1- 1 348 542
- EP-A1- 1 754 745
- US-A- 5 766 681

## Beschreibung

Die Erfindung betrifft ein Dämmsystem mit einem Dämmelement zur Schall- und/oder Wärmedämmung einer Gebäudewand oder -decke mit den Merkmalen des Oberbegriffs des Anspruchs 1. Das Dämmelement kann ein oder mehrere Dämmmaterialien, beispielsweise in schichtweiser Anordnung, umfassen.

Ferner betrifft die Erfindung ein Verfahren zur Schall- und/oder Wärmedämmung einer Gebäudewand oder -decke unter Verwendung eines solchen Dämmelementes.

### Stand der Technik

Dämmelemente zur Schall- und/oder Wärmedämmung einer Gebäudewand oder -decke werden in der Regel mittels eines Klebers an der Gebäudewand oder -decke befestigt. Bekannt sind aufschäumende Kleber, wie beispielsweise Schäume auf Basis von Polyurethan. Derartige Kleber neigen jedoch dazu nachzuexpandieren, so dass die Gefahr besteht, dass der nachexpandierende Kleber das Dämmelement vom Untergrund weg drückt. Als Bestandteil einer mehrere Dämmelemente umfassenden Dämmschicht eines Wärmedämmverbundsystems, kann das Nachexpandieren des Klebers demnach dazu führen, dass die Dämmschicht vor dem Aufbringen einer ein- oder mehrlagigen Putzschicht nachbearbeitet, insbesondere geschliffen, werden muss. Dies bedeutet einen zusätzlichen Arbeitsaufwand. Expandiert der Kleber noch nach dem Aufbringen einer ein- oder mehrlagigen Putzschicht nach, bilden sich regelmäßig unerwünschte Risse in der ein- oder mehrlagigen Putzschicht aus.

Die Neigung zur Nachexpansion besitzen insbesondere solche aufschäumenden Kleber, die, wie beispielsweise Polyurethanschaum, in Anwesenheit von Feuchtigkeit aufschäumen. Um bei Verwendung derartiger Klebeschäume zur Befestigung von Dämmelementen an einem Untergrund die Rissbildung in einer auf den Dämmelementen nachträglich aufgebrachten ein- oder mehrlagigen Putzschicht zu verhindern, wird in der Patentschrift DE 10 2004 035 249 B3 ein Verfahren zur Herstellung eines Wärmedämmverbundsystems vorgeschlagen, das vor dem Anbringen der Dämmelemente das Befeuchten des Untergrundes und/oder des Klebers vorsieht. Durch das Befeuchten des Untergrundes und/oder des auf den Untergrund aufgetragenen Klebers kann der Schäumvorgang vor dem Anbringen der Dämmelemente in Gang gesetzt und abgeschlossen werden, so dass es zu keinem unkontrollierten Abheben der Dämmelemente vom Untergrund und einer damit einhergehenden Rissbildung kommt. Das Befeuchten des Untergrundes und/oder des Klebers stellt jedoch einen zusätzlichen Arbeitsschritt dar, der das Verfahren aufwendiger macht. Ferner verringert sich die Verfahrenssicherheit, da mittels Aufsprühen oder Aufstreichen eine gleichmäßige Befeuchtung des Untergrundes und/oder des Klebers nicht gewährleistet ist. Darüber hinaus hat sich gezeigt, dass die Festigkeit der Klebeverbindung zu wünschen übrig lässt, wenn der Untergrund und/oder der Kleber zusätzlich befeuchtet wird. Insbesondere weist eine solche Klebeverbindung verringerte Haftzugwerte auf. Werden zudem isocyanatfreie aufschäumende Kleber eingesetzt, die von Hause aus bereits eine geringere Haft- bzw. Klebekraft als isocyanathaltige und damit toxikologisch bedenkliche Kleber besitzen, wird nur ein unbefriedigender Haftverbund zwischen dem Dämmelement und dem Untergrund erreicht. Die Problematik wird zum Teil noch dadurch verstärkt, dass pigmentierte Schaumstoffplatten als Dämmelemente verwendet werden, die bei Wärmeeinstrahlung dazu neigen, sich zu verziehen. Die Folge kann ein "Schüsseln" und damit ein zumindest teilweises Ablösen der Schaumstoffplatten vom Untergrund sein.

Aus der EP 1 754 745 A1 ist eine Schaustoffplatte bekannt, die zur Verbesserung des Haftverbundes mit mineralischen Baustoffen eine Oberfläche mit einer Beschichtung besitzt, die 1 bis 90 Gew.-% Pigmente mit hohem Streu- und/oder Reflexionsvermögen enthält. Die Beschichtung soll bewirken, dass sich die Schaumstoffplatte bei Wärmeeinstrahlung nicht oder nur geringfügig verzieht und es auf diese Weise zu keinem Ablösen der Schaumstoffplatte vom Untergrund kommt. Dies setzt voraus, dass die Wärmestrahlung reflektiert und nicht absorbiert wird. Um dies zu erreichen, ist die Beschichtung außen liegend anzuordnen bzw. die Schaumstoffplatte derart zu verbauen, dass die Pigmente mit hohem Streu- und/oder Reflexionsvermögen enthaltende Beschichtung außen zu liegen kommt.

Aus der US 5 766 681 A geht zudem einen Körper aus geschäumtem Polystyrol hervor, der mindestens eine Oberfläche mit einer Schutzbeschichtung aufweist.

Darüber hinaus sind aus der EP 1 348 542 A1 schaumstoffenthaltende Verbundsysteme bekannt, die mit intumeszierenden oder ablativen Dämmschichtbildnern als Deckschicht und gegebenenfalls als Zwischenschicht versehen sind.

Ausgehend von dem vorstehend genannten Stand der Technik liegt der Erfindung die Aufgabe zugrunde, ein Dämmsystem sowie ein Verfahren zur Schall- und/oder Wärmedämmung einer Gebäudewand oder -decke anzugeben, deren Einsatz einen verbesserten Haftverbund zwischen dem Dämmelement und dem jeweiligen Untergrund bewirkt. Ferner soll die Verfahrenssicherheit beim Anbringen eines Dämmelements erhöht werden.

Zur Lösung der Aufgaben werden ein Dämmsystem mit den Merkmalen des Anspruchs 1 sowie ein Verfahren mit den Merkmalen des Anspruchs 13 vorgeschlagen. Vorteilhafte Ausführungsformen der Erfindung sind in den jeweiligen Unteransprüchen angegeben.

### Offenbarung der Erfindung

Das zur Schall- und/oder Wärmedämmung einer Gebäudewand oder -decke vorgeschlagene Dämmsystem umfasst ein Dämmelement, das wenigstens eine Oberfläche mit einer Beschichtung besitzt. Die Beschichtung enthält wenigstens ein organisches und/oder anorganisches Bindemittel sowie wenigstens einen wasserhaltigen Füllstoff, wobei das Wasser vorrangig in chemisorbierter Form im Füllstoff gebunden ist. Beispielsweise kann das Wasser als Hydrat- oder Kristallwasser im Füllstoff vorliegen. Ferner umfasst das Dämmsystem einen Kleber zur Befestigung des Dämmelementes an der Gebäudewand oder -decke.

Wasserhaltige Füllstoffe besitzen die Eigenschaft, in Abhängigkeit von gewissen Faktoren, wie beispielsweise der Feuchtigkeit und/oder der Temperatur der Umgebung, zumindest einen Teil des gebundenen Wassers abzugeben. Die Abgabe des gebundenen Wassers erweist sich insbesondere dann als vorteilhaft, wenn zur Befestigung des Dämmelementes an einer Gebäudewand oder -decke ein Kleber verwendet wird, der zum Aushärten Feuchtigkeit benötigt, wie dies beispielsweise regelmäßig bei aufschäumenden Klebern der Fall ist, die benötigte Feuchtigkeit jedoch nicht vollständig der Umgebung, d. h. dem Untergrund und/oder der Luft, entzogen werden kann. Bei Verwendung eines erfindungsgemäßen Dämmsystems wird die fehlende Feuchtigkeit von der Beschichtung bzw. den hierin enthaltenden wasserhaltigen Füllstoffen zur Verfügung gestellt. Hierzu gilt es lediglich die Beschichtung des Dämmelementes in Kontakt mit dem Kleber zu bringen.

Die Neigung, gebundenes Wasser abzugeben, ist bei Füllstoffen, die Wasser vorrangig in chemisorbierter Form enthalten, geringer als bei solchen, die Wasser vorrangig in physiosorbierter Form enthalten. Das heißt, dass chemisorbiertes Wasser weniger "freiwillig" als physiosorbiertes Wasser abgeben wird. Versuche mit Füllstoffen, die chemisorbiertes Wasser enthalten, haben jedoch gezeigt, dass insbesondere in Abhängigkeit von der Umgebungsfeuchtigkeit gerade so viel Wasser abgegeben wird, wie zum Aushärten des Klebers benötigt wird, so dass die Wasserabgabe ausreichend ist.

Ferner ist es von Vorteil, wenn kein Überangebot an Feuchtigkeit bzw. Wasser besteht. Denn ein Überangebot an Feuchtigkeit kann zur Folge haben, dass der Kleber zu schnell aushärtet und es an der Oberfläche des Klebers zur Ausbildung eines glasartigen, spröden Films kommt, der sich negativ auf den Haftverbund zwischen dem Dämmelement und dem Kleber auswirkt. Erfolgt die Einbringung der Feuchtigkeit demgegenüber bedarfsgerecht bzw. kontrolliert, härtet der Kleber unter Ausbildung eines elastischen Films aus, der einen optimalen Haftverbund zwischen dem Dämmelement und dem Kleber gewährleistet. Erkennbar ist dies beispielsweise an dem Bruchbild von Dämmelementen mit einer erfindungsgemäßen Beschichtung, die mittels eines Schaumklebers an einem Untergrund befestigt und anschließend einer Haftzugfestigkeitsprüfung unterzogen wurden. Die Bruchkante liegt genau im Kontaktbereich des Dämmelementes mit dem Kleber, d. h. es bleiben kaum Reste des Klebers an der Dämmplatte haften. Zugleich werden hervorragende Haftzugfestigkeitswerte erreicht.

Darüber hinaus besitzen wasserhaltige Füllstoffe, die Wasser vorrangig in chemisorbierter Form enthalten, den Vorteil, dass sie - analog ihrer geringen Neigung, Wasser abzugeben - ferner eine geringe Neigung besitzen, Wasser aufzunehmen und wieder einzulagern. Während Füllstoffe, die Wasser vorrangig in physiosorbierter Form enthalten, eine deutlich größere Neigung besitzen, Wasser einzulagern. Beispielhaft seien hier nur die Tonmineralien Sepiolith und Bentonit genannt, die zur Gruppe der Schichtsilikate gehören und unter anderem als Katzenstreu Verwendung finden. Da eine Wasseraufnahme im Kontaktbereich des Dämmelementes mit dem Kleber vorliegend jedoch unerwünscht ist, sollte von der Verwendung derartiger wasserhaltiger Füllstoffe abgesehen werden.

Gegenüber dem aus dem Stand der Technik bekannten Verfahren, bei welchem der Untergrund und/oder der Kleber in einem zusätzlichen Arbeitsschritt befeuchtet wird, um die zum Aushärten des Klebers erforderliche Feuchtigkeit bereitzustellen, weist das vorliegend vorgeschlagene Dämmsystem den Vorteil auf, dass bei Bedarf die erforderliche Feuchtigkeit über die rückseitige Beschichtung des Dämmelementes zur Verfügung gestellt wird, wenn diese in Kontakt mit dem Kleber gelangt. Es bedarf daher keines zusätzlichen Arbeitsschritts, um die erforderliche Feuchtigkeit und damit das Aushärten des Klebers zu gewährleisten. Zudem wird gegenüber dem bekannten Verfahren die Verfahrenssicherheit erhöht, da das Einbringen von Feuchtigkeit weitgehend kontrolliert aufgrund einer chemischen Gleichgewichtsverschiebung erfolgt. Auf diese Weise ist sichergestellt, dass es zu keinem Überangebot an Wasser einschließlich der damit verbundenen Nachteile kommt. Der Haftverbund zwischen dem Dämmelement und dem Kleber wird ferner dadurch verbessert, dass das Einbringen zusätzlicher Feuchtigkeit erst bei Kontakt der Beschichtung des Dämmelements mit dem Kleber erfolgt.

Gemäß einer bevorzugten Ausführungsform der Erfindung enthält die Beschichtung mindestens 25 Gew.-%, vorzugsweise mindestens 35 Gew.-%, weiterhin vorzugsweise mindestens 45 Gew.-% wenigstens eines wasserhaltigen Füllstoffs bezogen auf das Trockengesamtgewicht der Ausgangsstoffe der Beschichtung. Weiterhin bevorzugt ist der Anteil der wasserhaltigen Füllstoffe derart hoch gewählt, dass nicht alle Füllstoffe von dem Bindemittel umhüllt werden und somit an der Oberfläche der Beschichtung zu liegen kommen. Zum Beschichten des Dämmelements wird daher vorzugsweise eine überkritische Formulierung gewählt.

Erfindungsgemäß ist die Beschichtung vollflächig auf wenigstens einer Oberfläche des Dämmelements aufgebracht. Bei der wenigstens einen Oberfläche handelt es sich um die Rückseite des Dämmelements, die beim Anbringen des Dämmelements an einer Gebäudewand oder -decke dem Untergrund zugewandt ist. Die Beschichtung kann auf diese Weise in Kontakt mit dem Kleber zur Befestigung des Dämmelements am Untergrund gelangen. Ergänzend wird vorgeschlagen, dass die Beschichtung eine Schichtstärke zwischen 0,05 und 5 mm, vorzugsweise zwischen 0,1 und 2 mm, weiterhin vorzugsweise zwischen 0,2 und 1 mm besitzt. Dadurch ist sichergestellt, dass das Dämmelement unter Zuhilfenahme der üblichen Werkzeuge, wie beispielsweise ein Messer oder ein heißer Draht, bearbeitbar, insbesondere zuschneidbar, bleibt.

Vorteilhafterweise enthält die Beschichtung wenigstens einen wasserhaltigen Füllstoff, der mindestens 10 Gew.-%, vorzugsweise mindestens 20 Gew.-%, weiterhin vorzugsweise mindestens 30 Gew.-% chemisorbiertes Wasser in Form von Kristall- und/oder Hydratwasser enthält. Auf diese Weise kann eine ausreichende Wasserabgabe sichergestellt werden.

Bevorzugt enthält die Beschichtung wenigstens ein Metallhydroxid, ein Hydrat eines Metallsilikats und/oder eines Metallsalzes, insbesondere eines Metallsulfats, und/oder ein Metalloxid als wasserhaltigen Füllstoff. Versuche haben gezeigt, dass derartige Füllstoffe - gleichwohl sie Wasser in chemisorbierter Form enthalten - das Wasser in ausreichender Menge abgeben.

Besonders bevorzugt enthält die Beschichtung wenigstens Aluminiumhydroxid, Kaolinit, Ettringit und/oder Titanoxidhydrat als wasserhaltigen Füllstoff. Mit diesen wasserhaltigen Füllstoffen konnten die besten Ergebnisse erzielt werden.

Des Weiteren wird vorgeschlagen, dass die Beschichtung wenigstens ein organisches Bindemittel, vorzugsweise Epoxidharz, Polyurethan, Silikonharz, ein Silan, Siloxan, Polysiloxan und/oder eine Polymerdispersion enthält. Als Polymerdispersion kommen insbesondere Acrylate, Styrolacrylate, Vinylacrylate, Vinylchloride, Misch- und/oder Copolymere enthaltende Dispersionen in Betracht. Organische Bindemittel weisen im Vergleich zu anorganischen Bindemitteln in der Regel eine höhere Bindekraft auf, so dass der Anteil des Bindemittels zugunsten des wasserhaltigen Füllstoffs reduziert werden kann. Alternativ oder ergänzend kann aber auch wenigstens ein anorganisches Bindemittel, beispielsweise Wasserglas, Kieselsol, Gips, Kalkhydrat und/oder Zement, in der Beschichtung enthalten sein.

Darüber hinaus kann die Beschichtung wenigstens einen weiteren Zusatzstoff, insbesondere ein Additiv, wie beispielsweise ein Pigment, einen Farbstoff, Fasern und/oder ein Flammschutzmittel, enthalten. Über den weiteren Zusatzstoff können die Eigenschaften der Beschichtung und/oder des Dämmelementes in Abhängigkeit von den jeweiligen Anforderungen, beispielsweise im Hinblick auf den Brandschutz, beeinflusst bzw. verbessert werden. Zum Beispiel kann die Beschichtung intumeszierende Substanzen, insbesondere Blähgrafit, Borate, Melaminverbindungen und/oder Phosphorverbindungen als Flammschutzmittel enthalten.

Ferner wird vorgeschlagen, dass das Dämmelement wenigstens ein Dämmmaterial, insbesondere expandiertes oder extrudiertes Polystyrol, Polyurethan, Polyisocyanurat, Phenolharz, einen Mineralschaum, Aerogele und/oder Holzfasern, umfasst. Die verschiedenen Dämmmaterialien können systematisch, beispielsweise schichtweise, oder unsystematisch angeordnet sein.

Besonders bevorzugt ist das Dämmelement ganz oder teilweise aus einem Schaumkunststoff hergestellt. Schaumkunststoffe besitzen nur eine geringe Eigenfeuchtigkeit, so dass bei Verwendung eines Klebers, der Feuchtigkeit zum Aushärten benötigt, die erforderliche Feuchtigkeit über die Beschichtung bzw. die hierin enthaltenen wasserhaltigen Füllstoffe zur Verfügung gestellt werden kann.

Der aufschäumende Kleber ist vorzugsweise ein Polyurethanschaum und weiterhin vorzugsweise ein isocyanatfreier aufschäumender Kleber. Hierbei kommen die Vorteile eines erfindungsgemäßen Dämmsystems besonders gut zum Tragen. Denn die wasserhaltigen Füllstoffe der Beschichtung ermöglichen das kontrollierte Einbringen von Feuchtigkeit, wenn der Kleber in Kontakt mit der Beschichtung gelangt. Dies ist der Fall, wenn das Dämmelement in der Weise an der Gebäudewand oder -decke befestigt wird, dass die beschichtete Oberfläche dem Untergrund zugewandt ist. Durch das kontrollierte Einbringen von Feuchtigkeit wird - wie vorstehend bereits in Zusammenhang mit dem erfindungsgemäßen Dämmelement ausgeführt - der Haftverbund zwischen dem Kleber und dem Dämmelement verbessert.

Polyurethanschäume benötigen zur Aushärtung sowie zur Ausbildung der vollen Klebekraft eine gewisse Feuchtigkeit, die in der Regel der umgebenden Luft oder dem Untergrund entnommen wird, auf dem der Kleber aufgebracht wird. Insbesondere bei der Verklebung von Dämmelementen aus einem Schaumkunststoff, der regelmäßig keine Feuchtigkeit enthält, kann die Versorgung des Klebers mit Feuchtigkeit jedoch unzureichend sein, so dass die wasserhaltige Füllstoffe enthaltende Beschichtung des Dämmelements hier Abhilfe schaffen kann.

Polyurethanschäume sind aufgrund ihres Gehalts an Restmonomeren und den daraus resultierenden Gesundheitsbedenken in die Kritik der Öffentlichkeit gelangt. Besonders bevorzugt findet daher ein isocyanatfreier Kleber Einsatz, der demgegenüber toxikologisch unbedenklich ist. Derartige toxikologisch unbedenkliche Kleber sind auch als "alpha-Kleber" bekannt, da sie silanterminierte Polymere enthalten, deren Molekülketten am Ende mit einer alpha-Silangruppe abschließen. Isocyanatfreie Kleber sind in der Regel jedoch reaktionsträger als die in die Kritik geratenen Polyurethanschäume und besitzen zudem regelmäßig eine geringere Klebekraft. Insofern gilt es Sorge zu tragen, dass der isocyanatfreie Kleber seine volle Klebekraft entfalten kann. Dies wird vorliegend dadurch ermöglicht, dass der isocyanatfreie Kleber in Verbindung mit einem erfindungsgemäßen Dämmsystem umfassend ein Dämmelement eingesetzt wird, das wenigstens eine Oberfläche mit einer wasserhaltige Füllstoffe enthaltenden Beschichtung besitzt. Wird die Beschichtung des Dämmelements in Kontakt mit dem Kleber gebracht, geben die hierin enthaltenen Füllstoffe - in Abhängigkeit von der in der Umgebung vorhandenen Feuchtigkeit - zumindest einen Teil des gebundenen Wassers ab, so eine ausreichende Versorgung des Kelbers mit Feuchtigkeit sichergestellt ist. Die Abgabe des Wassers erfolgt dabei in der Weise, dass ein optimaler Haftverbund zwischen dem Dämmelement und dem Klebeschaum erzielt wird. Zur Vermeidung von Wiederholungen wird auf die vorstehenden Ausführungen in Zusammenhang mit dem Dämmelement verwiesen.

Zur Lösung der eingangs genannten Aufgaben wird ferner ein Verfahren zur Schall- und/oder Wärmedämmung einer Gebäudewand oder -decke vorgeschlagen, bei welchem ein Dämmelement, das wenigstens eine Oberfläche mit einer Beschichtung besitzt, die wenigstens ein organisches und/oder anorganisches Bindemittel sowie wenigstens einen wasserhaltigen Füllstoff enthält, wobei das Wasser vorrangig in chemisorbierter Form im Füllstoff gebunden ist, mittels eines aufschäumenden Klebers an der Gebäudewand oder -decke befestigt wird. Erfindungsgemäß wird zur Befestigung des Dämmelements an der Gebäudewand oder -decke die Beschichtung des Dämmelementes in Kontakt mit dem aufschäumenden Kleber gebracht. Durch den Kontakt der Beschichtung des Dämmelements mit dem Kleber ist sichergestellt, dass der Kleber ausreichend mit Feuchtigkeit versorgt wird, um seine volle Klebekraft zu entwickeln. Denn die in der Beschichtung enthaltenen wasserhaltigen Füllstoffe sind in der Lage, in Abhängigkeit von der Feuchtigkeit der Umgebung zumindest einen Teil des gebundenen Wassers abzugeben. Die Abgabe des Wassers erfolgt aufgrund einer chemischen Gleichgewichtsverschiebung. Vorzugsweise findet ein in Anwesenheit von Feuchtigkeit aushärtender Kleber, beispielsweise ein Polyurethanschaum oder ein isocyanatfreier aufschäumender Kleber, zur Befestigung des Dämmelements an der Gebäudewand oder -decke Einsatz, da hier die Vorteile der Erfindung besonders gut zum Tragen kommen.

Ferner wird vorgeschlagen, dass nach dem Befestigen des Dämmelementes an der Gebäudewand oder -decke auf die außen liegende Oberfläche des Dämmelements eine Beschichtung, beispielsweise in Form einer Spachtelmasse, eines ein- oder mehrlagigen Putzes und/oder eines Anstrichs, aufgebracht wird. Auf diese Weise ermöglicht das erfindungsgemäße Verfahren unter Zuhilfenahme eines erfindungsgemäßen Dämmelements die Ausbildung eines Wärmedämmverbundsystems. Ein solches Wärmedämmverbundsystem weist im Vergleich zu bekannten Wärmedämmverbundsystemen eine verbesserte Haftzugfestigkeit auf, da der Haftverbund zwischen den die Dämmschicht ausbildenden Dämmelementen und dem Kleber optimiert ist. In der Folge neigt ein solches Wärmedämmverbundsystem auch weniger zur Rissbildung.

Bevorzugte Ausführungsformen eines erfindungsgemäßen Dämmsystems werden anhand der nachfolgenden Ausführungsbeispiele näher beschrieben.

### Ausführungsbeispiel 1

Die Rückseite einer herkömmlichen Dämmplatte aus expandiertem Polystyrol-Hartschaum wurde vollflächig mit einer 0,3 mm starken Beschichtung der folgenden Zusammensetzung versehen:

| | |
|---|---|
| 25,5 Gew.-% | Wasser |
| 18,0 Gew.-% | Wasserglas (Feststoffgehalt 30%) |
| 3,5 Gew.-% | Silikonharz (Feststoffgehalt 55%) |
| 5,0 Gew.-% | Styrolacrylat Bindemittel (Feststoffgehalt 50%) |
| 24,0 Gew.-% | Titanoxid-Hydrat |
| 8,0 Gew.-% | Kaolin |
| 6,0 Gew.-% | Aluminiumhydroxid |
| 10,0 Gew.-% | Additive, umfassend Flammschutzmittel, Dispergiermittel, Verdicker, Entschäumer und dergleichen |

Die auf diese Weise erhaltene Dämmplatte wurde mittels eines aufschäumenden alpha-Klebers (hier: Soudal SMX der Fa. Soudal), der vollflächig auf der beschichteten Rückseite der Dämmplatte aufgebracht wurde, mit Beton-Gehwegsplatten als Untergrund verklebt. Auf der Vorderseite der Dämmplatte wurde ein Zuganker zur späteren Prüfung der Haftzugfestigkeit befestigt.

Die Prüfung der Haftzugfestigkeit wurde nach drei Tagen Lagerung der verklebten Dämmplatte bei Raumklima an einer Zwick UPM 250SNA mit Traversenwegaufnehmer und Kraftsensor durchgeführt. Als Referenz A wurde die Prüfung der Haftzugfestigkeit an einem analogen Aufbau durchgeführt, mit dem Unterschied, dass eine unbeschichtete Dämmplatte verwendet wurde. Als Referenz B wurde die Prüfung der Haftzugfestigkeit an einem weiteren analogen Aufbau durchgeführt, mit dem Unterschied, dass eine unbeschichtete Dämmplatte verwendet wurde, deren Rückseite jedoch vor dem Verkleben mit den Beton-Gehwegplatten durch leichtes Besprühen mit Wasser angefeuchtet wurde.

Von den jeweils vorgenommenen Mehrfachmessungen werden nachfolgend nur die Durchschnittswerte genannt:

| | |
|---|---|
| Ausführungsbeispiel 1 | 91 kPa (± 10 kPa) |
| Referenz A | 22 kPa (± 13 kPa) |
| Referenz B | 54 kPa (± 9 kPa) |

Die Werte zeigen, dass die Haftzugfestigkeit durch die auf der Rückseite der Dämmplatte aufgebrachte Beschichtung deutlich verbessert werden konnte, insbesondere im Vergleich zu den Beispielen gemäß Referenz A.

Darüber hinaus waren Unterschiede im Bruchbild erkennbar. Während die Platten gemäß Ausführungsbeispiel 1 oder Referenz A ein "sauberes" Bruchbild aufwiesen, d. h. kaum haften gebliebene Klebereste aufwiesen, zeigten die Dämmplatten gemäß Referenz B Kleberrückstände. Dies lässt darauf schließen, dass das zusätzliche Anfeuchten den Verbund innerhalb der Kleberschicht schwächt, welche somit spröde und labil wird.

### Ausführungsbeispiel 2

Die Rückseite einer herkömmlichen Dämmplatte aus expandiertem Polystyrol-Hartschaum wurde vollflächig mit einer 0,4 mm starken Beschichtung der folgenden Zusammensetzung versehen:

| | |
|---|---|
| 34,0 Gew.-% | Wasser |
| 14,0 Gew.-% | Polyester-Polyurethan-Bindemittel (Feststoffgehalt 40%) |
| 33,0 Gew.-% | Aluminiumhydroxid |
| 5,0 Gew.-% | Kieselgur |
| 4,0 Gew.-% | Gips |
| 10,0 Gew.-% | Additive, umfassend Flammschutzmittel, Dispergiermittel, Verdicker, Entschäumer und dergleichen |

Die auf diese Weise erhaltene Dämmplatte wurde mittels eines Polyurethanschaums, der vollflächig auf der beschichteten Rückseite der Dämmplatte aufgebracht wurde, mit Beton-Gehwegsplatten als Untergrund verklebt. Auf der Vorderseite der Dämmplatte wurde ein Zuganker zur späteren Prüfung der Haftzugfestigkeit befestigt.

Die Prüfung der Haftzugfestigkeit wurde nach drei Tagen Lagerung der verklebten Dämmplatte bei Raumklima an einer Zwick UPM 250SNA mit Traversenwegaufnehmer und Kraftsensor durchgeführt. Als Referenz A wurde die Prüfung der Haftzugfestigkeit an einem analogen Aufbau durchgeführt, mit dem Unterschied, dass eine unbeschichtete Dämmplatte verwendet wurde. Als Referenz B wurde die Prüfung der Haftzugfestigkeit an einem weiteren analogen Aufbau durchgeführt, mit dem Unterschied, dass eine unbeschichtete Dämmplatte verwendet wurde, deren Rückseite jedoch vor dem Verkleben mit den Beton-Gehwegplatten durch leichtes Besprühen mit Wasser angefeuchtet wurde.

Von den jeweils vorgenommenen Mehrfachmessungen werden nachfolgend nur die Durchschnittswerte genannt:

| | |
|---|---|
| Ausführungsbeispiel 2 | 117 kPa (± 20 kPa) |
| Referenz A | 101 kPa (± 12 kPa) |
| Referenz B | 88 kPa (± 9 kPa) |

Die Werte zeigen erneut, dass die Haftzugfestigkeit durch die auf der Rückseite der Dämmplatte aufgebrachte Beschichtung deutlich verbessert werden konnte, wobei sich das zusätzliche Anfeuchten diesmal sogar als nachteilig in Bezug auf die Haftzugfestigkeit erwies.

Im Hinblick auf die jeweiligen Bruchbilder zeigten die Platten gemäß Ausführungsbeispiel 2 oder Referenz A "saubere" Bruchbilder, während bei den Platten gemäß Referenz B wiederum Kleberrückstände zu sehen waren.

## Patentansprüche

1. Dämmsystem zur Schall- und/oder Wärmedämmung einer Gebäudewand oder -decke umfassend ein Dämmelement sowie einen aufschäumenden Kleber zur Befestigung des Dämmelementes an der Gebäudewand oder - decke, wobei das Dämmelement wenigstens eine Oberfläche mit einer Beschichtung besitzt, die wenigstens ein organisches und/oder anorganisches Bindemittel sowie wenigstens einen wasserhaltigen Füllstoff enthält, wobei das Wasser vorrangig in chemisorbierter Form im Füllstoff gebunden ist,
**dadurch gekennzeichnet, dass** bezogen auf den Anteil der wasserhaltigen Füllstoffe eine überkritische Formulierung als Beschichtung gewählt wird und die Beschichtung vollflächig auf der Rückseite des Dämmelements aufgebracht ist, die beim Anbringen des Dämmelements an einer Gebäudewand oder -decke dem Untergrund zugewandt ist, so dass die Beschichtung in Kontakt mit dem Kleber zur Befestigung des Dämmelements am Untergrund gelangt.

2. Dämmsystem nach Anspruch 1,
**dadurch gekennzeichnet, dass** die Beschichtung mindestens 25 Gew.-%, vorzugsweise mindestens 35 Gew.-%, weiterhin vorzugsweise mindestens 45 Gew.-% wenigstens eines wasserhaltigen Füllstoffs bezogen auf das Trockengesamtgewicht der Ausgangsstoffe der Beschichtung enthält.

3. Dämmsystem nach einem der vorhergehenden Ansprüche,
**dadurch gekennzeichnet, dass** die Beschichtung eine Schichtstärke zwischen 0,05 und 5 mm, vorzugsweise zwischen 0,1 und 2 mm, weiterhin vorzugsweise zwischen 0,2 und 1 mm besitzt.

4. Dämmsystem nach einem der vorhergehenden Ansprüche,
**dadurch gekennzeichnet, dass** die Beschichtung wenigstens einen wasserhaltigen Füllstoff enthält, der mindestens 10 Gew.-%, vorzugsweise mindestens 20 Gew.-%, weiterhin vorzugsweise mindestens 30 Gew.-% chemisorbiertes Wasser in Form von Kristall- und/oder Hydratwasser enthält.

5. Dämmsystem nach einem der vorhergehenden Ansprüche,
**dadurch gekennzeichnet, dass** die Beschichtung wenigstens ein Metallhydroxid, ein Hydrat eines Metallsilikats und/oder eines Metallsalzes, insbesondere eines Metallsulfats, und/oder ein Metalloxid als wasserhaltigen Füllstoff enthält.

6. Dämmsystem nach einem der vorhergehenden Ansprüche,
**dadurch gekennzeichnet, dass** die Beschichtung wenigstens Aluminiumhydroxid, Kaolinit, Ettringit und/oder Titanoxidhydrat als wasserhaltigen Füllstoff enthält.

7. Dämmsystem nach einem der vorhergehenden Ansprüche,
**dadurch gekennzeichnet, dass** die Beschichtung wenigstens ein organisches Bindemittel, vorzugsweise Epoxidharz, Polyurethan, Silikonharz, ein Silan, Siloxan, Polysiloxan und/oder eine Polymerdispersion enthält.

8. Dämmsystem nach einem der vorhergehenden Ansprüche,
**dadurch gekennzeichnet, dass** die Beschichtung wenigstens ein anorganisches Bindemittel, beispielsweise Wasserglas, Kieselsol, Gips, Kalkhydrat und/oder Zement, enthält.

9. Dämmsystem nach einem der vorhergehenden Ansprüche,
**dadurch gekennzeichnet, dass** die Beschichtung wenigstens einen weiteren Zusatzstoff, insbesondere ein Additiv, wie beispielsweise ein Pigment, einen Farbstoff, Fasern und/oder ein Flammschutzmittel, enthält.

10. Dämmsystem nach einem der vorhergehenden Ansprüche,
**dadurch gekennzeichnet, dass** das Dämmelement wenigstens ein Dämmmaterial, insbesondere expandiertes oder extrudiertes Polystyrol, Polyurethan, Polyisocyanurat, Phenolharz, einen Mineralschaum, Aerogele und/oder Holzfasern, umfasst.

11. Dämmsystem nach einem der vorhergehenden Ansprüche,
**dadurch gekennzeichnet, dass** der aufschäumende Kleber ein Polyurethanschaum, vorzugsweise ein isocyanatfreier aufschäumender Kleber ist.

12. Verfahren zur Schall- und/oder Wärmedämmung einer Gebäudewand oder -decke, bei welchem ein Dämmelement, das wenigstens eine Oberfläche mit einer Beschichtung besitzt, die wenigstens ein organisches und/oder anorganisches Bindemittel sowie wenigstens einen wasserhaltigen Füllstoff enthält, wobei das Wasser vorrangig in chemisorbierter Form im Füllstoff gebunden ist, mittels eines aufschäumenden Klebers an der Gebäudewand oder -decke befestigt wird,
**dadurch gekennzeichnet, dass** bezogen auf den Anteil der wasserhaltigen Füllstoffe eine überkritische Formulierung als Beschichtung gewählt wird und die Beschichtung vollflächig auf der Rückseite des Dämmelements aufgebracht ist, die beim Anbringen des Dämmelements an der Gebäudewand oder -decke dem Untergrund zugewandt ist, wobei zur Befestigung des Dämmelementes an der Gebäudewand oder -decke die Beschichtung des Dämmelementes in Kontakt mit dem aufschäumenden Kleber gebracht wird.

13. Verfahren nach Anspruch 12,
**dadurch gekennzeichnet, dass** nach dem Befestigen des Dämmelementes an der Gebäudewand oder -decke auf die außen liegende Oberfläche des Dämmelements eine Beschichtung, beispielsweise in Form einer Spachtelmasse, eines ein- oder mehrlagigen Putzes und/oder eines Anstrichs, aufgebracht wird.

## Claims

1. Insulation system for the sound and/or thermal insulation of a building wall or ceiling comprising an insulation element as well as a foaming adhesive for fastening the insulation element to the building wall or ceiling, wherein the insulation element has at least one surface with a coating which contains at least one organic and/or inorganic binding agent as well at least one filling agent containing water, wherein the water is predominantly bound in chemisorbed form in the filling agent, **characterised in that** in relation to the proportion of filling agents containing water an overcritical formulation is selected as a coating and the coating is applied to the full area of the rear of the insulation element which on applying the thermal element to a building wall or ceiling faces the substrate so that the coating comes into contact with the adhesive to fasten the insulation element to the substrate.

2. Insulation system according to claim 1 **characterised in that** the coating contains at least 25% by weight, preferably 35% by weight, more preferably at least 45% by weight of at least one filling agent containing water related to the total dry weight of the raw materials of the coating.

3. Insulation system according to any one of the preceding claims **characterised in that** the coating has a coating thickness of between 0.05 and 5 mm, preferably between 0.1 and 2 mm, more preferably between 0.2 and 1 mm.

4. Insulation system according to any one of the preceding claims **characterised in that** the coating contains at least one filling agent containing water which contains at least 10% by weight, preferably at least 20% by weight, more preferably at least 30% by weight chemisorbed water in the form of crystal or hydrate water.

5. Insulation system according to any one of the preceding claims **characterised in** the coating contains at least one metal hydroxide, a hydrate of a metal silicate and/or a metal salt, in particular of a metal sulphate and/or metal oxide as the filling agent containing water.

6. Insulation system according to any one of the preceding claims **characterised in that** the coating contains at least aluminium hydroxide, kaolinite, ettringite and/or titanium hydrate as the filling agent containing water.

7. Insulation system according to any one of the preceding claims **characterised in that** the coating contains at least one organic binding agent, preferably epoxide resin, polyurethane, silicon resin, a silane, siloxane, polysiloxane and/or a polymer dispersion.

8. Insulation system according to any one of the preceding claims **characterised in that** the coating contains at least one inorganic binding agent, for example water glass, silicic acid, plaster, calcium hydroxide and/or cement.

9. Insulation system according to any one of the preceding claims **characterised in that** the coating contains at least one further additional material, in particular an additive such as, for example, a pigment, a dye, fibres and/or a flame retardant.

10. Insulation system according to any one of the preceding claims **characterised in that** the insulation element comprises at least one insulation material, in particular expanded or extruded polystyrene, polyurethane, polyisocyanurate, phenol resin, a mineral foam, aerogels and/or wood fibres.

11. Insulation system according to any one of the preceding claims **characterised in that** the foaming adhesive is a polyurethane foam, preferably an isocyanate-free foaming adhesive.

12. Method of sound and/or thermally insulating a building wall or ceiling in which at least one surface, which has a coating which contains at least one organic and/or inorganic binding agent as well as at least one filling agent containing water, wherein the water is predominantly bound in chemisorbed form in the filling agent, is fastened by means of a foaming adhesive to the building wall or ceiling, **characterised in that** in relation to the proportion of filling agent containing water an overcritical formulation is selected as a coating and the coating is applied to the full area of the rear of the insulation element which on applying the thermal element to a building wall or ceiling faces the substrate so that the coating comes into contact with the adhesive to fasten the insulation element to the substrate.

13. Method according to claim 12 **characterised in that** after fastening the insulating element to the building wall or ceiling, a coating is applied to the outer surface of the insulation element, in the form of a priming material, a single or multilayer plaster and/or coat of paint for example.

## Revendications

1. Système d'isolation pour l'isolation acoustique et thermique d'une paroi ou d'un plafond de bâtiment comprenant un élément d'isolation ainsi qu'un adhésif moussant pour la fixation de l'élément d'isolation à la paroi ou au plafond de bâtiment, l'élément d'isolation possédant au moins une surface avec un revêtement, qui contient au moins un liant organique et/ou minéral ainsi qu'au moins une masse de remplissage hydratée, l'eau étant liée préalablement dans la masse de remplissage dans une forme chimisorbée, **caractérisé en ce qu'**une formulation surcritique est choisie en tant que revêtement en se basant sur la part de masse de remplissage hydratée et le revêtement est appliqué sur toute la surface à la face arrière de l'élément d'isolation, qui est tournée vers le fond lors de la mise en place de l'élément d'isolation sur une paroi ou un plafond de bâtiment de telle sorte que le revêtement parvient en contact avec l'adhésif pour la fixation de l'élément d'isolation sur le fond.

2. Système d'isolation selon la revendication 1, **caractérisé en ce que** le revêtement contient au moins 25% / poids, de préférence au moins 35 %/poids, de préférence encore plus au moins 45%/poids d'au moins une masse de remplissage hydratée en se basant sur le poids total à sec des substances initiales du revêtement.

3. Système d'isolation selon l'une quelconque des revendications précédentes, **caractérisé en ce que** le revêtement possède une épaisseur de couche se situant entre 0,05 et 5 mm, de préférence entre 0,1 et 2 mm, de préférence encore plus entre 0,2 et 1 mm.

4. Système d'isolation selon l'une quelconque des revendications précédentes, **caractérisé en ce que** le revêtement contient au moins une masse de remplissage hydratée, qui contient au moins 10 %/poids, de préférence au moins 20 %/poids, de préférence encore plus au moins 30%/poids d'eau chimisorbée sous la forme d'eau cristalline et/ou d'hydratation.

5. Système d'isolation selon l'une quelconque des revendications précédentes, **caractérisé en ce que** le revêtement contient au moins un hydroxyde métallique, un hydrate d'un silicate métallique et/ou un sel métallique, notamment d'un sulfate métallique et/ou un oxyde métallique en tant que masse de remplissage hydratée.

6. Système d'isolation selon l'une quelconque des revendications précédentes, **caractérisé en ce que** le revêtement contient au moins de l'hydroxyde d'aluminium, de la kaolinite, de l'éttringite et/ou de l'oxyde de titane hydraté en tant que masse de remplissage hydratée.

7. Système d'isolation selon l'une quelconque des revendications précédentes, **caractérisé en ce que** le revêtement contient au moins un liant organique, de préférence une résine époxy, du polyuréthane, de la résine de silicone, un silane, du siloxane, du polysiloxane et/ou une dispersion polymère.

8. Système d'isolation selon l'une quelconque des revendications précédentes, **caractérisé en ce que** le revêtement contient au moins un liant minéral, par exemple du verre soluble, du sol de silice, du gypse, de l'hydrate de chaux et/ou du ciment.

9. Système d'isolation selon l'une quelconque des revendications précédentes, **caractérisé en ce que** le revêtement contient au moins un autre additif, notamment un additif comme par exemple un pigment, un colorant, des fibres et/ou un agent ignifuge.

10. Système d'isolation selon l'une quelconque des revendications précédentes, **caractérisé en ce que** l'élément d'isolation comprend au moins un matériau isolant, notamment du polystyrol expansé ou extrudé, du polyuréthane, du polyisocyanurate, de la résine phénolique, une mousse minérale, des aérogels et/ou des fibres de bois.

11. Système d'isolation selon l'une quelconque des revendications précédentes, **caractérisé en ce que** l'adhésif moussant est de la mousse de polyuréthane, de préférence un adhésif moussant dépourvu d'isocyanate.

12. Procédé pour l'isolation acoustique et/ou thermique d'une paroi ou d'un plafond de bâtiment, pour lequel un élément d'isolation, qui possède une surface avec un revêtement, qui contient au moins un liant organique et/ou minéral ainsi qu'au moins une masse de remplissage hydratée, l'eau étant liée préalablement sous forme chimisorbée dans la masse de remplissage, est fixé au moyen d'un adhésif moussant à une paroi ou un plafond de bâtiment, **caractérisé en ce qu'**une formulation surcritique est choisie en tant que revêtement en se basant sur la part de masse de remplissage hydratée et le revêtement est appliqué sur toute la surface à la face arrière de l'élément d'isolation, qui est tournée vers le fond lors de la mise en place de l'élément d'isolation sur la paroi ou le plafond de bâtiment, le revêtement de l'élément d'isolation étant mis en contact avec l'adhésif moussant pour la fixation de l'élément d'isolation à la paroi ou au plafond de bâtiment.

13. Procédé selon la revendication 12, **caractérisé en ce qu'**après la fixation de l'élément d'isolation à la paroi ou au plafond de bâtiment sur la surface extérieure de l'élément d'isolation, un revêtement est appliqué, par exemple sous la forme d'une masse de rebouchage, d'un enduit mono- ou multicouche et/ou d'une couche de peinture.
